# EUROPEAN PATENT APPLICATION

(11) **EP 4 717 594 A1**
(43) Date of publication of application: **01.04.2026**
(21) Application number: 25202895.6
(22) Date of filing: 17.09.2025
(51) Int. Cl.: B64C 11/26, F01D 5/28, F01D 5/30

(54) **COMPOSITE AIRFOIL ASSEMBLY**

(30) Priority: 27.09.2024 GB 202414224
(71) Applicant: GE Aviation Systems Limited, Bishops Cleeve Cheltenham Gloucestershire GL52 8SF (GB)
(72) Inventor: TREVARTHEN, James Alexander, Cheltenham, GL52 8SF (GB); KUMAR, Dattu, Cheltenham, GL52 8SF (GB); WHITE, Jordan John, Cheltenham, GL52 8SF (GB); MAGAN SANCHEZ, Alvaro, Cheltenham, GL52 8SF (GB); WOOD, Joshua, Cheltenham, GL52 8SF (GB)
(74) Representative: Openshaw & Co.

(57) **Abstract**

A composite airfoil assembly (100) and method of forming includes a spar assembly (120) with a spar core (126) and a spar fiber layer (128) at least partially surrounding the spar core (126), as well as a root assembly (130) with a sleeve assembly (127) carrying a set of spaced wedges (135) defining at least one slot (136) configured to receive a first end (121) of the spar assembly (120).

## Description

### TECHNICAL FIELD

The disclosure generally relates to turbine engine airfoil assemblies, and more specifically to a composite airfoil assembly and method.

### BACKGROUND

Turbine engines, and particularly gas or combustion turbine engines, are rotary engines that extract energy from a flow of gases passing through an engine core with a compressor section, a combustor, and a turbine section in axial flow arrangement. The compressor section and turbine section include one or more compressor stages and one or more turbine stages, respectively, with each stage formed by a set of rotating blades adjacent a set of stationary vanes.

During operation, air is drawn into the compressor section, pressurized by one or more compressor stages in the compressor section, and then mixed with fuel in the combustor for generating hot combustion gases. The combustion gases flow downstream through the turbine section, where the air is expanded and drives rotation of the one or more turbine stages. Rotation of the turbine stages can also drive rotation in other engine components, e.g. compressor stages, a fan, or the like.

Turbine engine airfoils, including stationary or rotating airfoils, can include composite materials in some examples. Such composite materials typically include a fiber-reinforced matrix and exhibit a high strength-to-weight ratio.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 is a schematic cross-sectional view of an exemplary turbine engine in accordance with various aspects described herein.
FIG. 2 is a schematic perspective view of an exemplary aircraft having the turbine engine of FIG. 1 and illustrating a composite airfoil assembly in accordance with various aspects described herein.
FIG. 3 is a schematic perspective view of the composite airfoil assembly of FIG. 2 illustrating a spar assembly and a root assembly in accordance with various aspects described herein.
FIG. 4 is a schematic perspective view of the spar assembly of FIG. 3 illustrating a formation process.
FIG. 5 is a schematic perspective view of the root assembly of FIG. 3 in isolation.
FIG. 6 is a schematic perspective view of the spar assembly and root assembly of FIG. 3 during a molding process.
FIG. 7 is a schematic perspective view of the composite airfoil assembly of FIG. 3 illustrating an outer skin.
FIG. 8 is a flowchart illustrating a method of forming a composite airfoil assembly.

### DETAILED DESCRIPTION

Aspects of the disclosure herein are directed to a composite airfoil assembly. The composite airfoil assembly can be for a turbine engine, the turbine engine being, for example, a gas turbine engine, a hybrid (gas-electric) turbine engine, or an electric engine. For the purposes of illustration, the present disclosure will be described with respect to a gas turbine engine airfoil assembly, and more specifically a composite airfoil assembly in one exemplary context of an unducted gas turbine engine. It will be understood, however, that aspects of the disclosure described herein are not so limited and can have general applicability with other airfoil assemblies, including stationary or rotating airfoils, and with other contexts, including turboprop engines, turbofan engines, turbojet engines, steam turbine engines, ducted turbine engines, electric motors, piston engines, or the like and can also be used to provide benefits in industrial, commercial, and residential applications.

The composite airfoil assembly can be mounted in a variety of ways. One such mounting is securing the composite airfoil assembly to a central hub or disk. In an exemplary implementation, the composite airfoil assembly can include a dovetail received within a complementary slot in the hub. Any suitable number of composite airfoil assemblies can be mounted circumferentially about the hub. In one exemplary implementation, the hub can be driven by a gearbox of the engine such that the hub and composite airfoil assembly(ies) collectively form a rotating assembly. In another exemplary implementation, the hub can be stationary such that the composite airfoil assembly(ies) form guide vanes, such as inlet guide vanes or outlet guide vanes. Further still, the composite airfoil assembly can be mounted with respect to the hub in a fixed arrangement, or in a variable-pitch arrangement wherein the airfoil can be movable or adjustable in pitch with respect to an incoming airflow direction.

As used herein, with respect to a fluid flow direction, the term "upstream" refers to a direction that is opposite the fluid flow direction, and the term "downstream" refers to a direction that is the same as the fluid flow direction. The term "fore" or "forward" can mean in front of something and "aft" or "rearward" can mean behind something. For example, when used in terms of fluid flow, fore/forward refers to an upstream direction and aft/rearward refers to a downstream direction.

Additionally, as used herein, the terms "radial" or "radially" refer to a direction away from a common center. For example, in the overall context of a turbine engine, radial refers to a direction along a ray extending between a center longitudinal axis of the engine and an outer engine circumference. Furthermore, as used herein, the term "set" or a "set" of elements can be any number of elements, including only one.

In addition, as used herein, the term "fluid" or iterations thereof can refer to any suitable fluid within the gas turbine engine at least a portion of the gas turbine engine is exposed to such as, but not limited to, combustion gases, ambient air, pressurized airflow, working airflow, or any combination thereof. It is also contemplated that the gas turbine engine can be other suitable turbine engines such as, but not limited to, a steam turbine engine or a supercritical carbon dioxide turbine engine. As a non-limiting example, the term "fluid" can refer to steam in a steam turbine engine, or to carbon dioxide in a supercritical carbon dioxide turbine engine.

All directional references (e.g., radial, axial, proximal, distal, upper, lower, upward, downward, left, right, lateral, front, back, top, bottom, above, below, vertical, horizontal, clockwise, counterclockwise, upstream, downstream, forward, aft, etc.) are only used for identification purposes to aid the reader's understanding of the present disclosure, and do not create limitations, particularly as to the position, orientation, or use of aspects of the disclosure described herein. Connection references (e.g., attached, coupled, secured, fastened, connected, and joined) are to be construed broadly and can include intermediate members between a collection of elements and relative movement between elements unless otherwise indicated. As such, connection references do not necessarily infer that two elements are directly connected and in fixed relation to one another. The exemplary drawings are for purposes of illustration only and the dimensions, positions, order and relative sizes reflected in the drawings attached hereto can vary.

The term "composite," as used herein, is indicative of a component having two or more materials. A composite can be a combination of at least two or more metallic, non-metallic, or a combination of metallic and non-metallic elements or materials. Examples of a composite material can be, but not limited to, a polymer matrix composite (PMC), a ceramic matrix composite (CMC), a metal matrix composite (MMC), carbon fibers, a polymeric resin, a thermoplastic polymer, bismaleimide (BMI) materials, polyimide materials, an epoxy resin, glass fibers, and silicon matrix materials.

As used herein, a "composite component" refers to a structure or a component including any suitable composite material. Composite components, such as a composite airfoil, can include several layers or plies of composite material. The layers or plies can vary in stiffness, material, and dimension to achieve the desired composite component or composite portion of a component having a predetermined weight, size, stiffness, and strength. One or more layers of adhesive can be used in forming or coupling composite components. Adhesives can include resin, epoxy resin, acrylics, polyurethane, or phenolics in some examples. Such adhesives can also require curing at elevated temperatures or other hardening techniques.

In one non-limiting example, a composite component can be formed using a dry fiber woven or braided fabric. One non-limiting example of a woven fabric can include dry carbon fibers woven together with thermoplastic polymer fibers or filaments. One non-limiting example of a braided architecture can include dry carbon fibers and thermoplastic polymer fibers braided together in multiple-strand arrangements. It is possible to tailor various properties of the composite part, such as the fiber volume, material strength, rigidity, impact resistance, or the like in some non-limiting examples, by selecting or tailoring the relative concentrations of the thermoplastic fibers and reinforcement fibers that have been woven or braided together. For instance, in one non-limiting example of a woven composite component having glass fibers, carbon fibers, and thermoplastic fibers, the carbon fiber concentration can be selected for providing material strength, the glass fiber concentration can be selected for enhanced impact resistance, which is a design characteristic for parts located near the inlet of the engine, and the thermoplastic fiber concentration can be selected for binding properties of the fibers in the woven fabric.

As used herein, "polymer matrix composite" or "PMC" refers to a class of materials. Such a PMC material can be defined in part by a prepreg, which can include a reinforcement material, such as a dry fiber material, which is pre-impregnated with a polymer matrix material, such as a thermoset resin or a thermoplastic resin. The prepregs can be in the form of unidirectional tapes or woven fabrics, which are then stacked on top of one another to create the number of stacked plies desired for the part.

In one non-limiting example of forming a composite component, multiple layers of prepreg can be stacked to a desired thickness and orientation for the composite component, and the resin can be subsequently cured and solidified to render the fiber-reinforced composite part. Resins for matrix materials of PMCs can be generally classified as thermosets or thermoplastics. Thermoplastic resins are generally categorized as polymers that can be repeatedly softened and flowed when heated and hardened when sufficiently cooled due to physical rather than chemical changes. Notable example classes of thermoplastic resins include nylons, thermoplastic polyesters, polyaryletherketones, and polycarbonate resins. Specific examples of high-performance thermoplastic resins that have been contemplated for use in aerospace applications include, polyetheretherketone (PEEK), polyetherketoneketone (PEKK), polyetherimide (PEI), polyaryletherketone (PAEK), and polyphenylene sulfide (PPS). In contrast, once fully cured into a hard rigid solid, thermoset resins do not undergo significant softening when heated, but instead thermally decompose when sufficiently heated. Notable examples of thermoset resins include epoxy, bismaleimide (BMI), and polyimide resins.

In still another non-limiting example, resin transfer molding (RTM) can be used to form a composite component in addition or as an alternative to prepreg, weaving, or braiding. RTM provides one example of an "out-of-autoclave" (OOA) process wherein the composite component can be formed and cured without need of an autoclave curing environment. Generally, RTM includes the application of dry fibers or matrix material to a mold or cavity. The dry fibers or matrix material can include prepreg, braided material, woven material, or any combination thereof. Placement or application of the dry fibers or matrix material can be manual or automated. Resin can be subsequently pumped into or otherwise provided to the mold or cavity to impregnate the dry fibers or matrix material. The combination of the impregnated fibers or matrix material and the resin are then cured and removed from the mold. The dry fibers or matrix material can also be contoured to shape the composite component or direct the resin. In certain examples where prepreg layups are used, the same resin used to form the prepreg layups can also be injected into the mold or cavity to form the composite component in a process known as "Same Qualified Resin Transfer Molding" (SQRTM). It is further contemplated that RTM can be vacuum-assisted in a process known as "Vacuum Assisted Resin Transfer Molding" (VARTM). In such a case, air within the mold can be removed as the resin is drawn into the mold, prior to heating or curing. Optionally, additional layers or reinforcing layers of a material differing from the dry fiber or matrix material can also be included or added prior to heating or curing. In some examples, post-curing processing can be performed on the composite component after removal from the mold.

As used herein, "ceramic matrix composite" or "CMC" refers to a class of materials with reinforcing fibers in a ceramic matrix. Generally, the reinforcing fibers provide structural integrity to the ceramic matrix. Some examples of reinforcing fibers can include, but are not limited to, non-oxide silicon-based materials (e.g., silicon carbide, silicon nitride, or mixtures thereof), non-oxide carbon-based materials (e.g., carbon), oxide ceramics (e.g., silicon oxycarbides, silicon oxynitrides, aluminum oxide (Al₂O₃), silicon dioxide (SiO₂), aluminosilicates such as mullite, or mixtures thereof), or mixtures thereof.

Some examples of ceramic matrix materials can include, but are not limited to, non-oxide silicon-based materials (e.g., silicon carbide, silicon nitride, or mixtures thereof), oxide ceramics (e.g., silicon oxycarbides, silicon oxynitrides, aluminum oxide (Al₂O₃), silicon dioxide (SiO₂), aluminosilicates, or mixtures thereof), or mixtures thereof. Optionally, ceramic particles (e.g., oxides of Si, Al, Zr, Y, and combinations thereof) and inorganic fillers (e.g., pyrophyllite, wollastonite, mica, talc, kyanite, and montmorillonite) can also be included within the ceramic matrix.

Generally, particular CMCs can be referred to as their combination of type of fiber/type of matrix. For example, C/SiC for carbon-fiber-reinforced silicon carbide; SiC/SiC for silicon carbide-fiber-reinforced silicon carbide, SiC/SiN for silicon carbide fiber-reinforced silicon nitride, SiC/SiC-SiN for silicon carbide fiber-reinforced silicon carbide/silicon nitride matrix mixture, or the like. In other examples, the CMCs can be comprised of a matrix and reinforcing fibers comprising oxide-based materials such as aluminum oxide (Al₂O₃), silicon dioxide (SiO₂), aluminosilicates, and mixtures thereof. Aluminosilicates can include crystalline materials such as mullite (3Al₂O₃•2SiO₂), as well as glassy aluminosilicates.

In certain non-limiting examples, the reinforcing fibers may be bundled and/or coated prior to inclusion within the matrix. For example, bundles of the fibers may be formed as a reinforced tape, such as a unidirectional reinforced tape. A plurality of the tapes may be laid up together to form a preform component. The bundles of fibers may be impregnated with a slurry composition prior to forming the preform or after formation of the preform. The preform may then undergo thermal processing, and subsequent chemical processing to arrive at a component formed of a CMC material having a desired chemical composition. For example, the preform may undergo a cure or burn-out to yield a high char residue in the preform, and subsequent melt-infiltration with silicon, or a cure or pyrolysis to yield a silicon carbide matrix in the preform, and subsequent chemical vapor infiltration with silicon carbide. Additional steps may be taken to improve densification of the preform, either before or after chemical vapor infiltration, by injecting it with a liquid resin or polymer followed by a thermal processing step to fill the voids with silicon carbide. CMC material as used herein may be formed using any known or hereinafter developed methods including, but not limited to, melt infiltration, chemical vapor infiltration, polymer impregnation pyrolysis (PIP), or any combination thereof.

Such materials, along with certain monolithic ceramics (i.e., ceramic materials without a reinforcing material), are particularly suitable for higher temperature applications. Additionally, these ceramic materials are lightweight compared to superalloys, yet can still provide strength and durability to the component made therefrom. Therefore, such materials are currently being considered for many gas turbine components used in higher temperature sections of gas turbine engines, such as airfoils (e.g., turbines, and vanes), combustors, shrouds and other like components that would benefit from the lighter-weight and higher temperature capability these materials can offer.

The term "metallic" as used herein is indicative of a material that includes metal such as, but not limited to, titanium, iron, aluminum, stainless steel, and nickel alloys. A metallic material or alloy can be a combination of at least two or more elements or materials, where at least one is a metal.

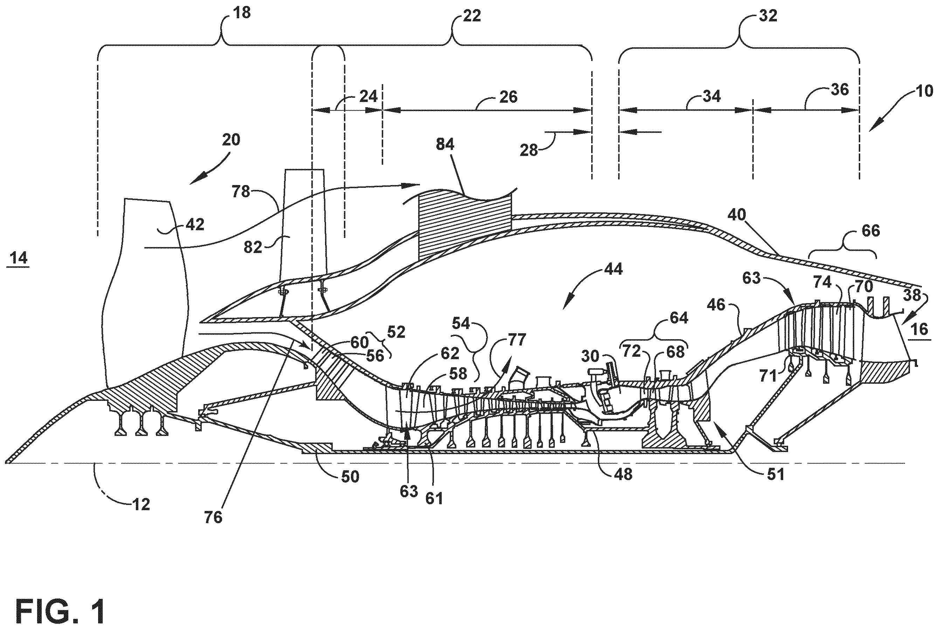

Turning to FIG. 1, a schematic cross-sectional diagram is shown of one exemplary turbine engine 10 in the form of an open rotor or unducted fan engine for an aircraft. The turbine engine 10 has a generally longitudinally extending axis or engine centerline 12 extending from a forward end 14 to an aft end 16. The turbine engine 10 includes, in a downstream serial flow relationship: a fan section 18 including a fan 20; a compressor section 22 including a booster or low pressure (LP) compressor 24 and a high pressure (HP) compressor 26; a combustion section 28 including a combustor 30; a turbine section 32 including an HP turbine 34 and an LP turbine 36; and an exhaust section 38.

An exterior surface, defined by a housing or nacelle 40, of the turbine engine 10 extends from the forward end 14 of the turbine engine 10 toward the aft end 16 of the turbine engine 10 and covers at least a portion of the compressor section 22, the combustion section 28, the turbine section 32, and the exhaust section 38. As shown, the fan section 18 is positioned at a forward portion of the nacelle 40 and also forward of the combustion section 28. It is contemplated that the fan section 18 can be positioned axially forward, aft, or in-line with the combustion section 28. That is, a pusher configuration is contemplated, where one or more propulsion devices or sections are located axially aft of the combustion section 28.

In the non-limiting example shown, the fan section 18 includes circumferentially spaced blades or propellers defining a set of rotatable fan blades 42 (also referred to herein as "set of fan blades 42"), as well as circumferentially spaced stationary airfoils defining a set of fan vanes 82. The set of fan vanes 82 can be positioned downstream of the set of fan blades 42. The set of fan blades 42 and the set of fan vanes 82 are disposed radially from and circumferentially about the engine centerline 12. It is also contemplated that multiple sets of fan blades 42 or multiple sets of fan vanes 82 can be provided, such as in an alternating arrangement with fan vanes disposed axially between fan blades in one example. It is further contemplated that the set of fan vanes 82 can rotate such that the set of fan blades 42 rotate in a first direction and the set of fan vanes 82 rotate in a second direction about the engine centerline 12.

The set of fan blades 42 can be mounted in a variety of ways. One such mounting is securing the blades to a central hub or disk, which can be driven by a gearbox of the engine. In an exemplary implementation, the composite airfoil assembly can include a dovetail received within a complementary slot in the hub. In this manner, any suitable number of composite airfoil assemblies can be mounted circumferentially about the hub to collectively from a rotating assembly.

The compressor section 22, the combustion section 28, and the turbine section 32 are collectively referred to as an engine core 44, which generates combustion gases. The engine core 44 is surrounded by an engine casing 46, which is operatively coupled with a portion of the nacelle 40 of the turbine engine 10.

An HP shaft or spool 48 disposed coaxially about the engine centerline 12 of the turbine engine 10 drivingly connects the HP turbine 34 to the HP compressor 26. An LP shaft or spool 50, which is disposed coaxially about the engine centerline 12 of the turbine engine 10 within the larger diameter annular HP spool 48, drivingly connects the LP turbine 36 to the LP compressor 24 and fan 20. The HP and LP spools 48, 50 are rotatable about the engine centerline 12 and coupled to a set of rotatable elements, which collectively define a rotor 51.

It will be appreciated that the turbine engine 10 can be either a direct drive or integral drive engine utilizing a reduction gearbox coupling the LP shaft or spool 50 to the fan 20.

The LP compressor 24 and the HP compressor 26, respectively, include a set of compressor stages 52, 54, in which a set of compressor blades 56, 58 rotate relative to a corresponding set of static compressor vanes 60, 62 (also called a nozzle) to compress or pressurize the stream of fluid passing through the stage. In a single compressor stage 52, 54, multiple compressor blades 56, 58 are provided in a ring and extend radially outwardly relative to the engine centerline 12, from a blade platform to a blade tip, while the corresponding static compressor vanes 60, 62 are positioned upstream of and adjacent to the compressor blades 56, 58. It is noted that the number of blades, vanes, and compressor stages shown in FIG. 1 were selected for illustrative purposes only, and that other numbers are possible.

The compressor blades 56, 58 for a stage of the compressor section 22 are mounted to a disk 61, which is mounted to the corresponding one of the HP and LP spools 48, 50, with each stage having its own disk 61. The static compressor vanes 60, 62 for a stage of the compressor section 22 are mounted to the engine casing 46 in a circumferential arrangement.

The HP turbine 34 and the LP turbine 36, respectively, include a set of turbine stages 64, 66, in which a set of turbine blades 68, 70 are rotated relative to a corresponding set of static turbine vanes 72, 74 (also called a nozzle) to extract energy from the stream of fluid passing through the stage. In a single turbine stage 64, 66, multiple turbine blades 68, 70 are provided in a ring and extend radially outwardly relative to the engine centerline 12, from a blade platform to a blade tip, while the corresponding static turbine vanes 72, 74 are positioned upstream of and adjacent to the turbine blades 68, 70. It is noted that the number of blades, vanes, and turbine stages shown in FIG. 1 were selected for illustrative purposes only, and that other numbers are possible.

The turbine blades 68, 70 for a stage of the turbine section 32 are mounted to a disk 71, which is mounted to the corresponding one of the HP and LP spools 48, 50, with each stage having a dedicated disk 71. The static turbine vanes 72, 74 for a stage of the turbine section 32 are mounted to the engine casing 46 in a circumferential arrangement.

Rotary portions of the turbine engine 10, such as the blades 56, 58, 68, 70 among the compressor section 22 and the turbine section 32 are also referred to individually or collectively as the rotor 51. As such, the rotor 51 refers to the combination of rotating elements throughout the turbine engine 10.

Complementary to the rotary portions, the stationary portions of the turbine engine 10, such as the static vanes 60, 62, 72, 74 among the compressor section 22 and the turbine section 32 are also referred to individually or collectively as a stator 63. As such, the stator 63 refers to the combination of non-rotating elements throughout the turbine engine 10.

Alternatively, the rotor 51 can be a first rotor and the stationary portions of the turbine engine 10, such as the static vanes 60, 62, 72, 74 among the compressor section 22 and the turbine section 32 can be coupled to a second rotor located radially outward of the first rotor. The first rotor and the second rotor can rotate in opposite directions resulting in a counter rotating engine.

The nacelle 40 is operatively coupled to the turbine engine 10 and covers at least a portion of the engine core 44, the engine casing 46, the exhaust section 38, or a combination thereof. The nacelle 40 can extend axially forward such that a portion of the nacelle 40 overlays or covers a portion of the fan section 18 or a booster section of the turbine engine 10.

During operation of the turbine engine 10, a working airflow 76 enters the engine core 44, and an inlet airflow 78 flows past the fan section 18 over the nacelle 40. The inlet airflow 78 flows through the set of fan blades 42, over at least a portion of the set of stationary fan vanes 82, and the nacelle 40 of the turbine engine 10. The inlet airflow 78 then flows past the set of stationary fan vanes 82, following the curvature of the nacelle 40 and toward the exhaust section 38. At least some of the inlet airflow 78 merges with the working airflow 76 downstream of the exhaust section 38 of the turbine engine 10. In this manner, the working airflow 76 and the inlet airflow 78 collectively form an overall thrust of the turbine engine 10.

The working airflow 76 can be used for combustion within the engine core 44. More specifically, the working airflow 76 flows into the LP compressor 24, which then pressurizes the working airflow 76 thus defining a pressurized airflow that is supplied to the HP compressor 26, which further pressurizes the air. The working airflow 76, or the pressurized airflow, from the HP compressor 26 is mixed with fuel in the combustor 30 and ignited, thereby generating combustion gases. Some work is extracted from these gases by the HP turbine 34, which drives the HP compressor 26. The combustion gases are discharged into the LP turbine 36, which extracts additional work to drive the LP compressor 24, and the working airflow 76, or exhaust gas, is ultimately discharged from the turbine engine 10 via the exhaust section 38. The driving of the LP turbine 36 drives the LP spool 50 to rotate the fan 20 and the LP compressor 24. The working airflow 76, including the pressurized airflow and the combustion gases, defines a working airflow that flows through the compressor section 22, the combustion section 28, and the turbine section 32 of the turbine engine 10.

A portion of the working airflow 76 can also be drawn as bleed air 77 (e.g., from the compressor section 22). The bleed air 77 provides an airflow to engine components for cooling. The temperature of the working airflow 76 exiting the combustor 30 is significantly increased with respect to the working airflow 76 within the compressor section 22. As such, cooling provided by the bleed air 77 can be used for operating of such engine components in heightened temperature environments or a hot portion of the turbine engine 10. In the context of a turbine engine, the hot portions of the engine are normally downstream of the combustor 30, especially the turbine section 32, with the HP turbine 34 being the hottest portion as it is directly downstream of the combustion section 28.

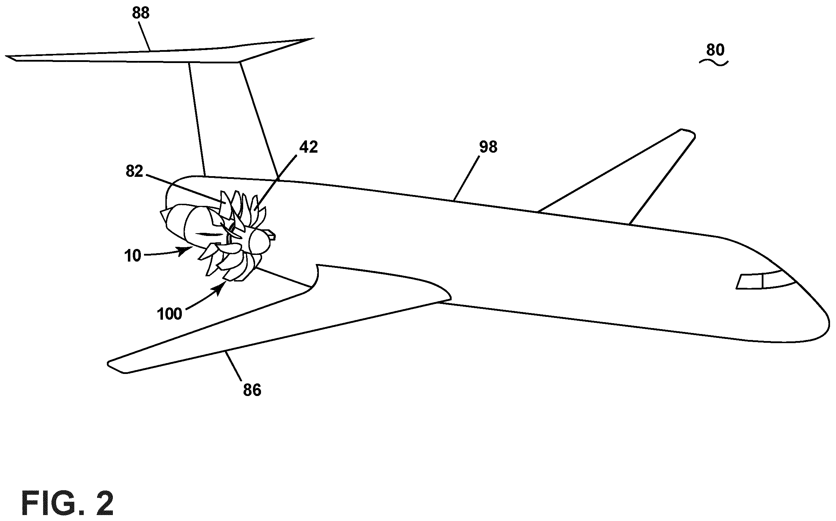

FIG. 2 illustrates one exemplary aircraft 80 having the turbine engine 10 of FIG. 1. The aircraft 80 can have any suitable form. As shown, the aircraft 80 includes a fuselage 98, with wings 86 and a tail wing 88 extending from the fuselage 98.

The turbine engine 10 is shown with the set of fan blades 42 and the set of fan vanes 82. The turbine engine 10 includes at least one composite airfoil assembly 100 (also referred to herein as "airfoil assembly 100"). In the non-limiting example shown, the composite airfoil assembly 100 is provided in the set of fan blades 42, with it being understood that the composite airfoil assembly 100 can be provided in any suitable portion of the turbine engine 10. For instance, the composite airfoil assembly 100 can be configured to rotate at a rotational speed between 500-3000 RPM during operation.

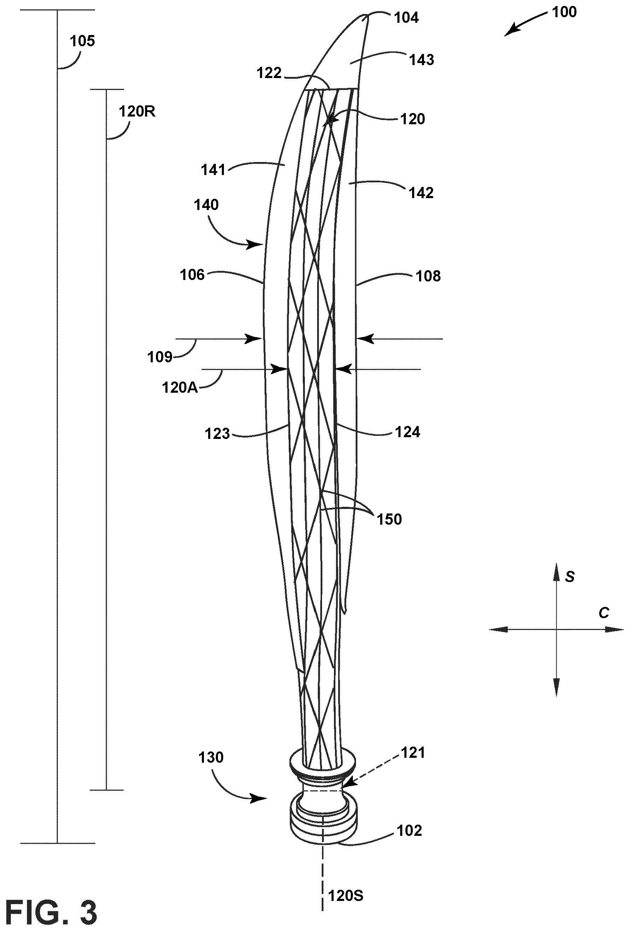

Referring now to FIG. 3, a schematic view illustrates portions of the composite airfoil assembly 100 in one exemplary implementation. The composite airfoil assembly 100 extends radially between a root 102 and a tip 104 defining a span-wise direction S. The composite airfoil assembly 100 also extends between a leading edge 106 and a trailing edge 108 to define a chord-wise direction C. A total radial length 105 is defined between the root 102 and the tip 104. A total axial length 109 is defined between the leading edge 106 and the trailing edge 108.

As shown, the composite airfoil assembly 100 includes at least a spar assembly 120, a root assembly 130, and a set of preforms 140. The spar assembly 120 can extend from a first end 121 to a second end 122 to define a spar axis 120S, and also defines a radial spar length 120R between the first and second ends 121, 122 as shown. While the first end 121 is shown in one exemplary position within the root assembly 130, it should be understood that the first end 121 can extend to any suitable position. The spar assembly 120 can also extend from a forward edge 123 proximate the leading edge 106 to an aft edge 124 proximate the trailing edge 108 to define an axial spar length 120A. Either or both of the radial spar length 120R or the axial spar length 120A can be designed, selected, or the like based on the respective total radial length 105 or total axial length 109. In one non-limiting example, the radial spar length 120R can be in a range from 20% to 100% of the total radial length 105, where the range is inclusive of the endpoints. In another non-limiting example, the axial spar length 120A can be in a range from 10% to 100% of the total axial length 109, where the range is inclusive of the endpoints.

The first end 121 of the spar assembly 120 can be received, mounted, secured, or the like within the root assembly 130. The root assembly 130 can be configured to couple or mount to a rotatable disk, hub, or the like. For instance, the root assembly 130 can be held in place by bearings within a slot, frictional contact within a slot, welding, adhesion, or fasteners, in non-limiting examples. It is understood that multiple composite airfoil assemblies 100 can be provided and arranged circumferentially about such a disk or hub. For instance, the multiple composite airfoil assemblies 100 can form rotatable blade assemblies with such a disk or hub. In an alternative example, the multiple composite airfoil assemblies 100 can form stationary vane assemblies, such as inlet guide vanes or outlet guide vanes.

The set of preforms 140 can be arranged with at least the spar assembly 120 to at least partially define portions of the composite airfoil assembly 100, such as the leading edge 106, the trailing edge 108, the tip 104, or combinations thereof, in some examples. In the illustrated example, the set of preforms 140 includes a first preform 141, a second preform 142, and a third preform 143. The spar assembly 120 can be positioned between the first preform 141 and the second preform 142 as shown. The first preform 141 can at least partially define the leading edge 106. The second preform 142 can at least partially define the trailing edge 108. The third preform 143 can at least partially define the tip 104. It is further contemplated that portions of the spar assembly 120 can also at least partially define the leading edge 106, the trailing edge 108, the tip 104, or combinations thereof, in some implementations. While illustrated as having three preforms, the set of preforms 140 can include any number of preforms.

The set of preforms 140 can include composite materials, including fiber materials (e.g., glass fiber, carbon fiber, etc.), foams, polymers, or combinations thereof, as well as adhesives or resins for bonding to adjacent components. It is further contemplated that each preform of the set of preforms 140 can include different materials. That is, by way of example, the first preform 141 can be made of a first material and the second preform 142 can be made of a second material.

The spar assembly 120 can have a varied geometric profile between the first and second ends 121, 122. For instance, the spar assembly 120 can have a first geometric profile at the first end 121 transitioning to a second geometric profile at the second end 122. Either or both of the first end 121 or the second end 122 can have a geometric profile that is cylindrical, flared, convex, concave, squared, asymmetric, or irregular. Further still, the second end 122 can have a second geometric profile that at least partially matches, conforms to, or defines the overall airfoil profile of the composite airfoil assembly 100. It is also contemplated that the first end 121 can include a flared portion, a dovetail portion, or the like for mechanical retention within the root assembly 130.

The spar assembly 120 can include triaxially braided fibers 150. The fibers 150 can include, but are not limited to, single strands, fiber tows, woven fibers, braided fibers, twisted fibers, knitted fibers, yarns, or combinations thereof, that form or define the spar assembly 120. For instance, in some implementations, fiber tows can be arranged into twists and subsequently braided to form the spar assembly 120. The fibers 150 are also shown with exaggerated spacing for visual clarity, and it will be understood that the spar assembly 120 can have any suitable fiber density or fiber coverage.

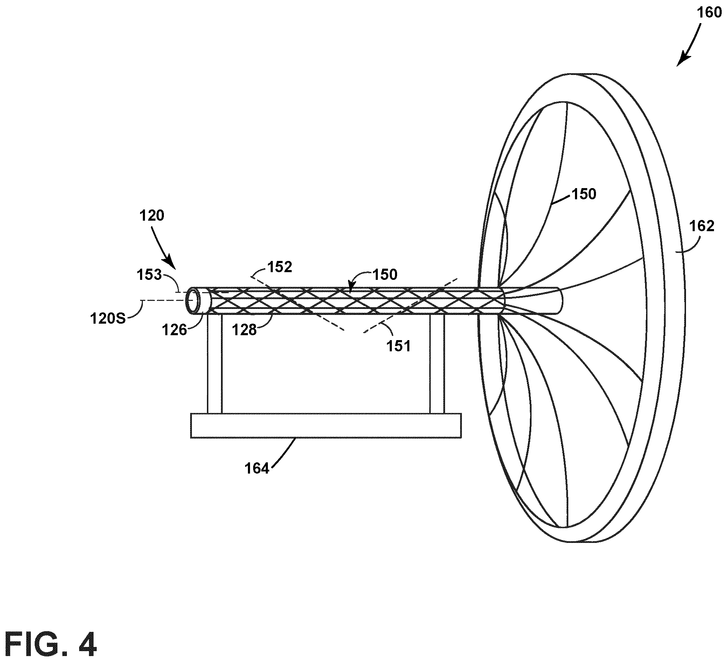

Turning to FIG. 4, a portion of the spar assembly 120 is shown during a formation process. More specifically, the spar assembly 120 can include a spar core 126 and a spar fiber layer 128. The spar core 126 can be made of a foam material or a polymer material including, but not limited to, an open cell foam, a closed cell foam, fiber reinforced foams, metal foams, composite foams, metal matrix foams, resinous foams, vinyl foams, stochastic or regular foams, ceramic foams, microcellular foams, polymer foams, polymers, or the like, or combinations thereof. That is, the spar core 126 can be a fly away foam core or a fly away hollow core.

Alternatively, in a different and non-limiting example, the spar core 126 can be a removable mandrel. By way of non-limiting example, the removable mandrel can be a metal mandrel or removable bladder mandrel.

The spar fiber layer 128 can be triaxially braided about the spar core 126. Particularly, the spar fiber layer 128 can include fibers 150 braided along a first axis 151, a second axis 152, and a third axis 153. As shown, the third axis 153 can be aligned with the spar axis 120S. It is contemplated that the first axis 151 and the second axis 152 can define equal and opposite angles with respect to the third axis, such as -50 and +50 degrees in one example. In some implementations, the first axis 151 and the second axis 152 can each form differing angles with the third axis. In still another example, the first, second, and third axes 151, 152, 153 can each be unaligned with or not parallel to the spar axis 120S.

In the example shown, a braiding assembly 160 includes a circumferential frame 162 and a carriage 164 guiding the spar core 126 through the circumferential frame 162. The fibers 150 are arranged about the circumferential frame 162 and can be automatically braided along three axes about the spar core 126 to define the spar fiber layer 128. It will be understood that the fibers 150 illustrated about the circumferential frame 162 are exemplary and can have any suitable arrangement.

The spar assembly 120 having the spar fiber layer 128 triaxially braided about the spar core 126 can define a box spar, where the triaxially braided fibers 150 encase the spar core 126. That is, the spar fiber layer 128 includes a surface on a leading edge side, trailing edge side, a pressure side, and a suction side of the spar core 126 that are unitarily formed to provide strength in multiple dimensions via the triaxially braided fibers 150.

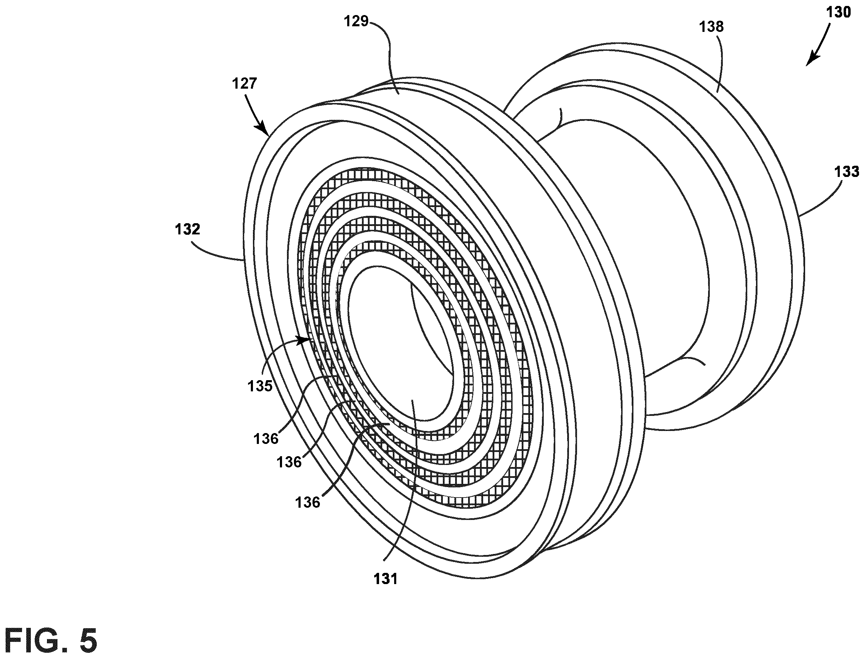

FIG. 5 illustrates additional details of the root assembly 130. The root assembly 130 extends from an outer end 132 to an inner end 133. The inner end 133 can include a mount 138 for securing to a hub or disk. The outer end 132 includes at least one slot 136 configured to receive the first end 121 of the spar assembly 120 (FIG. 3), such as by insertion. The root assembly 130 can include a sleeve assembly 127 having an outer sleeve 129 and an inner sleeve 131.

A set of spaced wedges 135 can be carried by the sleeve assembly 127. The at least one slot 136 can be defined by the set of spaced wedges 135 and the sleeve assembly 127. As illustrated, by way of example, the set of spaced wedges 135 are carried by the outer sleeve 129. That is, the sleeve assembly 127 can be an outward flaring root where a load path extends from the set of spaced wedges 135 radially outward to the outer sleeve 129.

Alternatively, in a different and non-limiting example, it is contemplated that the sleeve assembly 127 is an inward flaring root, or tulip style root, having a load path that extend from the set of spaced wedges 135 radially inward to the inner sleeve 131.

In the non-limiting example shown, the at least one slot 136 is a plurality of slots provided at the outer end 132, such as to accommodate multiple spar types with a common root assembly 130. It is also contemplated that a single slot can be provided. In some implementations, the sleeve assembly 127 can include a metallic body, such as aluminum or steel, and the set of spaced wedges 135 can include one or more wedges made of a composite material, such as a fibrous material in a resin matrix.

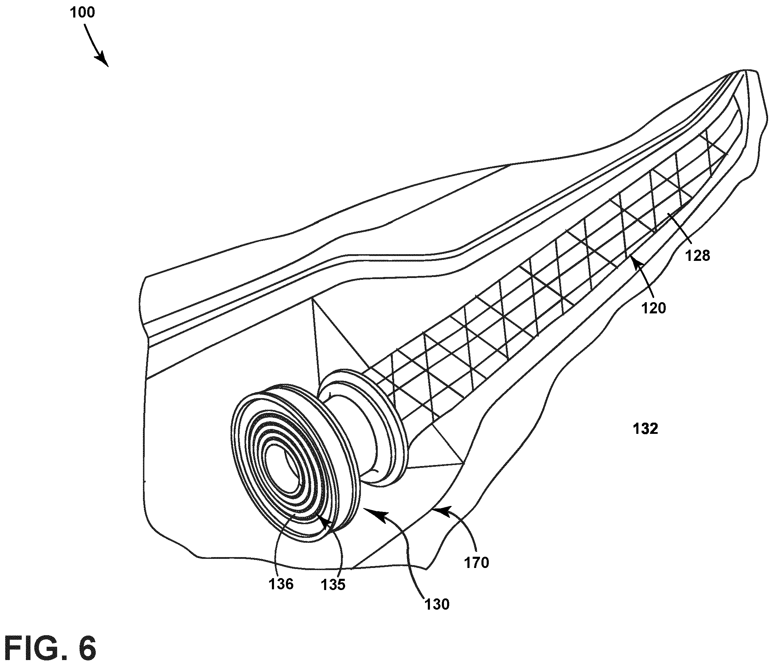

Turning to FIG. 6, the spar assembly 120 and the root assembly 130 are illustrated after coupling and during an injection molding process. The spar assembly 120 is inserted into the root assembly 130 such that the at least one slot 136 receives the first end 121 of the spar assembly 120. It is further contemplated that the at least one slot 136 is a plurality of slots 136 that receive portions of the first end 121 of the spar assembly 120.

An injection mold 170 is provided and can enclose the root assembly 130 as well as a portion of the spar assembly 120. In this manner, a resin material can be injected into the at least one slot 136. Such resin can envelop the set of spaced wedges or at least partially fill one or more slots 136. Such resin can also envelop or saturate portions of the spar assembly 120 (e.g., portions in or adjacent the one or more slots 136), including the spar fiber layer 128, to secure the spar assembly 120 within the root assembly 130. After completion of injection molding, the root assembly 130 and spar assembly 120 can be cured, heat treated, or the like. In this manner, the spar assembly 120 and root assembly 130 can be secured together to form a singular spar-root assembly. The retention of the spar assembly 120 received at the at least one slot 136, where the resin is provided to the at least one slot 136 to solidify the coupling provides a simplification of that manufacture processes.

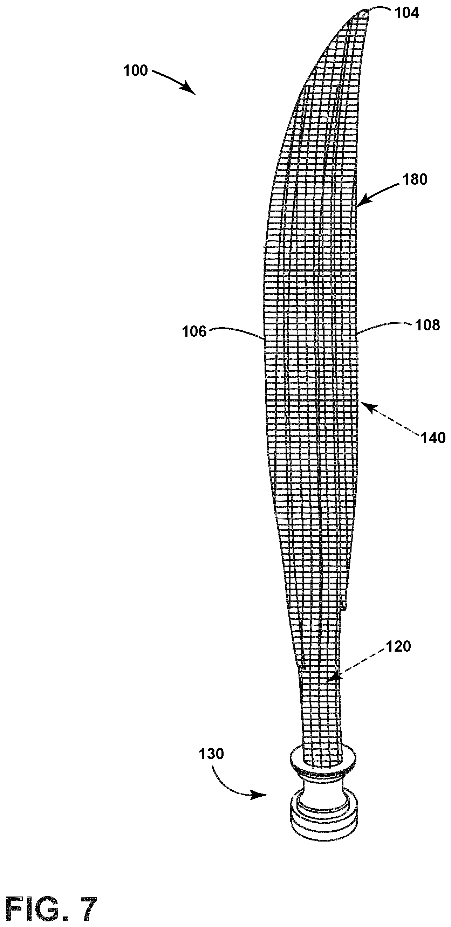

Referring now to FIG. 7, the composite airfoil assembly 100 is shown with a fiber skin layer 180. The fiber skin layer 180 can be formed at least partially about the set of preforms 140 and the spar assembly 120. In the illustrated example, the fiber skin layer 180 envelops the set of preforms 140 and the spar assembly 120 and forms an outer wall for the composite airfoil assembly 100. It is also contemplated that additional exterior materials, coatings, or layers can be provided including, but not limited to, exterior sealing or finishing layers, foam (e.g., polyurethane foam, isocyanate polyurethane foam, spray-applied cellular plastic (SPF) foam), erosion-resistant or corrosion-resistant layers, paint layers, UV-resistant layers, heat-resistant layers, hydrophobic or ice-phobic layers, or combinations thereof.

The fiber skin layer 180 can include intertwined fibers in a resin matrix. For example, the fiber skin layer 180 can include braided fibers, such as biaxially braided fibers, in a resin matrix. For instance, in a non-limiting example, the fiber skin layer 180 can be formed by biaxially braiding dry carbon fibers and subsequently curing with resin to form the layer.

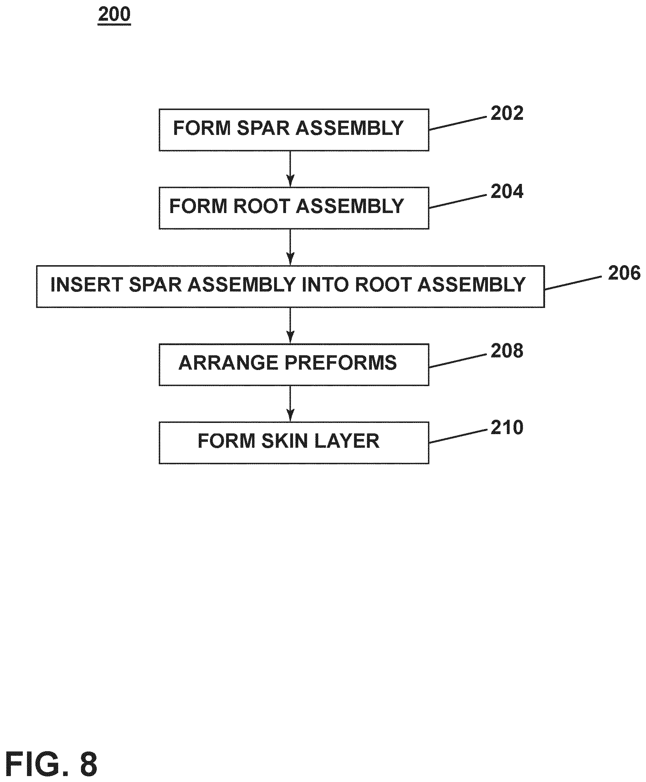

Turning to FIG. 8, a method 200 of forming the composite airfoil assembly 100 is shown. The method 200 includes, at 202, triaxially braiding fibers about a spar core, such as the spar core 126, to form a spar assembly, such as the spar assembly 120, extending from the first end 121 to the second end 122. The method 200 includes, at 204, forming a root assembly, such as the root assembly 130. The root assembly 130 can be formed with the at least one slot 136. The method 200 includes, at 206, inserting the first end 121 of the spar assembly 120 into the root assembly 130. The method 200 also includes, at 208, arranging a set of preforms, such as the set of preforms 140, onto the spar assembly 120 to at least partially define at least one of the leading edge 106, the trailing edge 108, or the tip 104. The method 200 further includes, at 210, forming a fiber skin layer, such as the fiber skin layer 180, over at least a portion of the spar assembly 120 and the set of preforms 140. Optionally, forming a fiber skin layer can include applying resin to the fiber skin layer 180 to define a composite fiber skin layer.

Optionally, the method 200 can include injecting resin into the root assembly 130 and over at least a portion of the spar assembly 120 to secure the spar assembly 120 within the root assembly 130 as described above. Optionally, the method 200 can further include arranging the first preform 141 onto the spar assembly 120 to at least partially define the leading edge 106. Optionally, the method 200 can further include arranging the second preform 142 onto the spar assembly 120 to at least partially define the trailing edge 108. Optionally, the method 200 can further include arranging the third preform 143 onto the spar assembly 120 to at least partially define the tip 104.

Aspects of the disclosure provide for a composite airfoil assembly, such as a composite propeller blade, with a triaxially braided carbon fiber spar/root assembly having integrated composite wedge retention. Aspects of the disclosure further provide for preform shaping, such as by foam cores, and forming an outer composite shell, which can include materials such as carbon, glass, Kevlar^{®} fiber, or woven or braided cloths, and combinations thereof.

The described aspects of the present disclosure provide for a variety of benefits. The use of composite materials provides for a lighter airfoil assembly without sacrificing performance of the airfoil assembly when compared to a non-composite (e.g., cast) airfoil assembly. In other words, the materials used for the composite airfoil assembly are lighter than the materials used for the non-composite airfoil assembly and do not sacrifice the ability to perform as intended within the turbine engine. The decreased weight of the airfoil assembly, in turn, means an increased efficiency of the turbine engine when compared to a conventional turbine engine including non-composite airfoil assemblies.

Aspects of the composite airfoil assembly described herein additionally provide for improvements in material properties compared to other airfoil assemblies. In one example, the composite airfoil assembly with the triaxially braided spar core described herein had an increased material stiffness of 35%, an increased material strength of 22%, and reduced torsion during operation, leading to overall reductions in structural vibration. Further still, the use of triaxial braiding directly onto the spar core provides for more efficient production processes, including an automated assembly line, as compared to other composite airfoils with stacked plies, braided fabrics, or prepregs which are generally formed in advance and applied by hand.

To the extent not already described, the different features and structures of the various embodiments can be used in combination, or in substitution with each other as desired. That one feature is not illustrated in all of the embodiments is not meant to be construed that it cannot be so illustrated but is done for brevity of description. Thus, the various features of the different embodiments can be mixed and matched as desired to form new embodiments, whether or not the new embodiments are expressly described. All combinations or permutations of features described herein are covered by this disclosure.

This written description uses examples to describe aspects of the disclosure described herein, including the best mode, and also to enable any person skilled in the art to practice aspects of the disclosure, including making and using any devices or systems and performing any incorporated methods. The patentable scope of aspects of the disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Further aspects are provided by the subject matter of the following clauses:
A composite airfoil assembly for a turbine engine and extending span-wise between a root and a tip, and also extending chord-wise between a leading edge and a trailing edge, the composite airfoil assembly comprising a spar assembly extending from a first end to a second end and comprising a spar core and a spar fiber layer at least partially surrounding the spar core, with the spar fiber layer comprising triaxially braided fibers, and a root assembly at least partially defining the root and comprising a sleeve assembly carrying a set of spaced wedges, with the set of spaced wedges defining at least one slot configured to receive the first end of the spar assembly.

The composite airfoil assembly of any preceding clause, wherein the sleeve assembly includes an outer sleeve and an inner sleeve.

The composite airfoil assembly of any preceding clause, further comprising a first preform at least partially defining the leading edge, and a second preform at least partially defining the trailing edge, with the spar assembly positioned at least partially between the first preform and the second preform.

The composite airfoil assembly of any preceding clause, wherein at least one of the first preform or the second preform comprises at least one of a composite material or a foam material.

The composite airfoil assembly of any preceding clause, further comprising a fiber skin layer formed at least partially about the first preform, the second preform, and the spar assembly.

The composite airfoil assembly of any preceding clause, wherein the fiber skin layer comprises biaxially braided fibers in a resin matrix.

The composite airfoil assembly of any preceding clause, wherein the biaxially braided fibers comprise carbon fibers.

The composite airfoil assembly of any preceding clause, wherein at least one of the spar fiber layer or the fiber skin layer further comprises at least one of woven fibers, twisted fibers, knitted fibers, yarns, tows, or single strands.

The composite airfoil assembly of any preceding clause, wherein the triaxially braided fibers comprise carbon fibers in a resin matrix.

The composite airfoil assembly of any preceding clause, wherein the sleeve assembly comprises a metallic body, and the set of spaced wedges comprises a composite wedge.

The composite airfoil assembly of any preceding clause, further comprising a resin material within the at least one slot and securing the spar assembly to the root assembly.

The composite airfoil assembly of any preceding clause, further comprising a third preform positioned at the second end of the spar assembly to at least partially define the tip.

The composite airfoil assembly of any preceding clause, wherein the third preform comprises at least one of a composite material or a foam material.

The composite airfoil assembly of any preceding clause, wherein a total radial length is defined between the root and the tip, and a radial spar length is defined between the first end and the second end of the spar assembly, wherein the radial spar length is in a range from 20% to 100% of the total radial length.

The composite airfoil assembly of any preceding clause, wherein the spar assembly further comprises a forward edge proximate the leading edge, an aft edge proximate the trailing edge, and an axial spar length defined between the forward edge and the aft edge, wherein the composite airfoil assembly further defines a total axial length between the leading edge and the trailing edge, and wherein the axial spar length is in a range from 10% to 100% of the total axial length.

The composite airfoil assembly of any preceding clause, wherein the at least one slot is a plurality of slots that receive portions of the first end of the spar assembly.

The composite airfoil assembly of any preceding clause, wherein the spar core is a fly away foam core or a fly away hollow core.

The composite airfoil assembly of any preceding clause, wherein the spar core is a removable mandrel.

A method of forming a composite airfoil assembly having a leading edge, a trailing edge, a root, and a tip, the method comprising triaxially braiding fibers about a spar core to form a spar assembly extending from a first end to a second end, inserting the first end of the spar assembly into a root assembly having at least one slot, arranging a set of preforms onto the spar assembly to at least partially define at least one of the leading edge, the trailing edge, or the tip, and forming a fiber skin layer over at least a portion of the spar assembly and the set of preforms.

The method of any preceding clause, wherein triaxially braiding fibers comprises triaxially braiding dry carbon fibers about the spar core.

The method of any preceding clause, wherein the spar assembly defines a spar axis between the first end and the second end, and wherein the triaxially braiding comprises braiding fibers extending along the spar axis.

The method of any preceding clause, further comprising injecting resin into the root assembly and over at least a portion of the spar assembly to secure the spar assembly within the root assembly.

The method of any preceding clause, wherein arranging the set of preforms comprises arranging a first preform onto the spar assembly to at least partially define the leading edge and arranging a second preform onto the spar assembly to at least partially define the trailing edge.

The method of any preceding clause, wherein arranging the set of preforms further comprises arranging a third preform onto the spar assembly to at least partially define the tip.

The method of any preceding clause, wherein forming the fiber skin layer comprises biaxially braiding dry carbon fibers over the at least a portion of the spar assembly and the set of preforms.

The method of any preceding clause, further comprising applying resin to the fiber skin layer to define a composite fiber skin layer.

The method of any preceding clause, wherein the triaxially braiding fibers about the spar core includes providing a spar core at a carriage of a braiding assembly and guiding the spar core, via the carriage, through a circumferential frame.

The method of any preceding clause, wherein the guiding the spar core through the circumferential frame includes automatically braiding fibers arranged about the circumferential frame along three axes about the spar core to define the spar fiber layer.

A turbine engine comprising a compression section, a combustion section, and a turbine section in serial flow arrangement, and a composite airfoil assembly extending span-wise between a root and a tip, and also extending chord-wise between a leading edge and a trailing edge, the composite airfoil assembly comprising a spar assembly extending from a first end to a second end and comprising a spar core and a spar fiber layer at least partially surrounding the spar core, with the spar fiber layer comprising triaxially braided fibers, and a root assembly at least partially defining the root and comprising a sleeve assembly carrying a set of spaced wedges, with the set of spaced wedges defining at least one slot configured to receive the first end of the spar assembly.

The turbine engine of any preceding clause, wherein the sleeve assembly includes an outer sleeve and an inner sleeve.

The turbine engine of any preceding clause, further comprising a first preform at least partially defining the leading edge, and a second preform at least partially defining the trailing edge, with the spar assembly positioned at least partially between the first preform and the second preform.

The turbine engine of any preceding clause, wherein at least one of the first preform or the second preform comprises at least one of a composite material or a foam material.

The turbine engine of any preceding clause, further comprising a fiber skin layer formed at least partially about the first preform, the second preform, and the spar assembly.

The turbine engine of any preceding clause, wherein the fiber skin layer comprises biaxially braided fibers in a resin matrix.

The turbine engine of any preceding clause, wherein the biaxially braided fibers comprise carbon fibers.

The turbine engine of any preceding clause, wherein at least one of the spar fiber layer or the fiber skin layer further comprises at least one of woven fibers, twisted fibers, knitted fibers, yarns, tows, or single strands.

The turbine engine of any preceding clause, wherein the triaxially braided fibers comprise carbon fibers in a resin matrix.

The turbine engine of any preceding clause, wherein the sleeve assembly comprises a metallic body, and the set of spaced wedges comprises a composite wedge.

The turbine engine of any preceding clause, further comprising a resin material within the at least one slot and securing the spar assembly to the root assembly.

The turbine engine of any preceding clause, further comprising a third preform positioned at the second end of the spar assembly to at least partially define the tip.

The turbine engine of any preceding clause, wherein the third preform comprises at least one of a composite material or a foam material.

The turbine engine of any preceding clause, wherein a total radial length is defined between the root and the tip, and a radial spar length is defined between the first end and the second end of the spar assembly, wherein the radial spar length is in a range from 20% to 100% of the total radial length.

The turbine engine of any preceding clause, wherein the spar assembly further comprises a forward edge proximate the leading edge, an aft edge proximate the trailing edge, and an axial spar length defined between the forward edge and the aft edge, wherein the composite airfoil assembly further defines a total axial length between the leading edge and the trailing edge, and wherein the axial spar length is in a range from 10% to 100% of the total axial length.

The turbine engine of any preceding clause, wherein the at least one slot is a plurality of slots that receive portions of the first end of the spar assembly.

The turbine engine of any preceding clause, wherein the spar core is a fly away foam core or a fly away hollow core.

The turbine engine of any preceding clause, wherein the spar core is a removable mandrel.

## Claims

1. A composite airfoil assembly (100) for a turbine engine (10) and extending span-wise between a root (102) and a tip (104), and also extending chord-wise between a leading edge (106) and a trailing edge (108), the composite airfoil assembly (100) comprising:
a spar assembly (120) extending from a first end (121) to a second end (122) and comprising a spar core (126) and a spar fiber layer (128) at least partially surrounding the spar core (126), with the spar fiber layer (128) comprising triaxially braided fibers (150); and
a root assembly (130) at least partially defining the root (102) and comprising a sleeve assembly (127) carrying a set of spaced wedges (135), with the set of spaced wedges (135) defining at least one slot (136) configured to receive the first end (121) of the spar assembly (120).

2. The composite airfoil assembly (100) of claim 1, further comprising a first preform (141) at least partially defining the leading edge (106), and a second preform (142) at least partially defining the trailing edge (108), with the spar assembly (120) positioned at least partially between the first preform (141) and the second preform (142).

3. The composite airfoil assembly (100) of claim 2, wherein at least one of the first preform (141) or the second preform (142) comprises at least one of a composite material or a foam material.

4. The composite airfoil assembly (100) of claim 2 or 3, further comprising a fiber skin layer (180) formed at least partially about the first preform (141), the second preform (142), and the spar assembly (120).

5. The composite airfoil assembly (100) of claim 4, wherein the fiber skin layer (180) comprises biaxially braided fibers in a resin matrix.

6. The composite airfoil assembly (100) of claim 5, wherein the biaxially braided fibers comprise carbon fibers.

7. The composite airfoil assembly (100) of claim 5 or 6, wherein at least one of the spar fiber layer (128) or the fiber skin layer (180) further comprises at least one of woven fibers, twisted fibers, knitted fibers, yarns, tows, or single strands.

8. The composite airfoil assembly (100) of any one of claims 1-7, wherein the triaxially braided fibers (150) comprise carbon fibers in a resin matrix.

9. The composite airfoil assembly (100) of any one of claims 1-8, wherein the sleeve assembly (127) comprises a metallic body, and the set of spaced wedges (135) comprises a composite wedge.

10. The composite airfoil assembly (100) of any one of claims 1-9, further comprising a resin material within the at least one slot (136) and securing the spar assembly (120) to the root assembly (130).

11. The composite airfoil assembly (100) of any one of claims 1-10, further comprising a third preform (143) positioned at the second end (122) of the spar assembly (120) to at least partially define the tip (104).

12. The composite airfoil assembly (100) of claim 11, wherein the third preform (143) comprises at least one of a composite material or a foam material.

13. The composite airfoil assembly (100) of any one of claims 1-12, wherein
a total radial length (105) is defined between the root (102) and the tip (104); and
a radial spar length (120R) is defined between the first end (121) and the second end (122) of the spar assembly (120);
wherein the radial spar length (120R) is in a range from 20% to 100% of the total radial length (105).

14. The composite airfoil assembly (100) of any one of claims 1-13, wherein the spar assembly (120) further comprises a forward edge (123) proximate the leading edge (106), an aft edge (124) proximate the trailing edge (108), and an axial spar length (120A) defined between the forward edge (123) and the aft edge (124);
wherein the composite airfoil assembly (100) further defines a total axial length (109) between the leading edge (106) and the trailing edge (108); and
wherein the axial spar length (120A) is in a range from 10% to 100% of the total axial length (109).

15. The composite airfoil assembly (100) of any one of claims 1-14, wherein the at least one slot (136) is a plurality of slots (136) that receive portions of the first end (121) of the spar assembly (120).
